(19) Europäisches Patentamt
European Patent Office
Office européen des brevets

(11) **EP 4 300 180 A2**

(12) **DEMANDE DE BREVET EUROPEEN**

(43) Date de publication:
**03.01.2024 Bulletin 2024/01**

(21) Numéro de dépôt: **23210563.5**

(22) Date de dépôt: **14.12.2022**

(51) Classification Internationale des Brevets (IPC):
**G02F 1/1343** (2006.01)

(52) Classification Coopérative des Brevets (CPC):
**G02F 1/134381;** G02F 2201/122; G02F 2203/50

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **17.12.2021 FR 2113768**

(62) Numéro(s) de document de la (des) demande(s) initiale(s) en application de l'article 76 CBE:
**22213473.6 / 4 198 623**

(71) Demandeur: **Commissariat à l'Energie Atomique et aux Energies Alternatives 75015 Paris (FR)**

(72) Inventeurs:
• **RACINE, Benoît**
  **38054 Grenoble (FR)**
• **VERDANT, Arnaud**
  **38054 Grenoble (FR)**
• **JOLY, Pierre**
  **38054 Grenoble (FR)**

(74) Mandataire: **Atout PI Laplace Immeuble "Visium" 22, avenue Aristide Briand 94117 Arcueil Cedex (FR)**

Remarques:
Cette demande a été déposée le 17.11.2023 comme demande divisionnaire de la demande mentionnée sous le code INID 62.

(54) **DISPOSITIF DE MODULATION DE PHASE À CRISTAL LIQUIDE**

(57) L'invention concerne un dispositif (10) de modulation en phase d'un faisceau lumineux comprenant :
- une matrice de cellules élémentaires, dénommées pixels, couplée à un circuit d'adressage desdits pixels,
- le dispositif comprenant en outre un ensemble d'électrodes dites latérales s'étendant selon une direction Y dite verticale perpendiculaire à ladite direction d'alignement Xa et configurées pour appliquer, pour chaque pixel et via au moins deux électrodes latérales, une tension dite d'accélération (Vacc) générant un champ électrique latéral (Era) sensiblement parallèle à ladite direction d'alignement, dans un sens permettant un retour accéléré des molécules de cristal liquide vers leur orientation de repos, ladite tension d'accélération étant configurée pour être appliquée lors d'une phase dénommée phase de relaxation accélérée, lorsque la tension d'activation n'est plus appliquée.

FIG.5

**Description**

**DOMAINE DE L'INVENTION**

La présente invention concerne les dispositifs de modulation de phase à cristal et plus particulièrement des dispositifs de ce type présentant un temps de réponse amélioré.

**ETAT DE LA TECHNIQUE**

Les dispositifs à cristal liquide sont connus pour la réalisation d'afficheurs (LCD pour Liquid Crystal Display), qui modulent un faisceau lumineux en amplitude. Ces afficheurs ont une structure matricielle, et chaque cellule élémentaire de cristal liquide forme un pixel de l'afficheur. L'orientation des molécules de cristal liquide est modifiée par application d'un champ entre deux électrodes disposées de part et d'autre de la couche de cristal liquide, une électrode dite de pixel et une électrode transparente commune à tous les pixels. Chaque pixel est adressé via au moins un transistor de commande localisé sur le pixel et relié à l'électrode de pixel, et qui est relié à un circuit de commande afin d'appliquer au pixel la tension électrique désirée. On dénomme transistor de commande un transistor élémentaire qui est configuré pour appliquer la tension désirée au pixel. L'application de cette tension pour un pixel peut être réalisée via plusieurs transistors élémentaires. Une modification de l'orientation des molécules de cristal liquide induit une modification de la polarisation du faisceau incident, ce qui crée une modification de la transmission au travers d'un polariseur. Plusieurs structures de cristal liquide sont connues pour les afficheurs : Mode TN (Twisted nematic), mode VA (Vertically Aligned), mode IPS (In Plane Switching).

Les modulateurs à cristal liquide, connus sous le terme générique de SLM (Spatial Light Modulator), utilisés pour réaliser des afficheurs à vision directe (télévision, écran d'ordinateur) fonctionnent en transmission. Les deux électrodes sont alors transparentes, le transistor de commande ou TFT (transistors en couches minces ou Thin Film transistor) est localisé dans un coin du pixel, et le circuit d'adressage est partiellement localisé sur les bords de l'afficheur, une partie du traitement pouvant être réalisée dans une unité de traitement extérieure.

Pour des applications de projection on peut également utiliser des structures de cristal liquide fonctionnant en réflexion. Dans ce cas les pixels sont de plus petite taille et la couche de cristal liquide est déposée sur un substrat en silicium dans lequel est partiellement localisé le circuit d'adressage. L'électrode pixel est alors réfléchissante. On dénomme ce type d'afficheur LCOS (Liquid Crystal on Silicon).

Les SLM, basés sur le contrôle électrique des propriétés optiques d'une couche de cristal liquide, typiquement nématiques, sont plus généralement adaptés pour modifier spatialement la phase, l'amplitude ou l'état de polarisation d'une onde lumineuse.

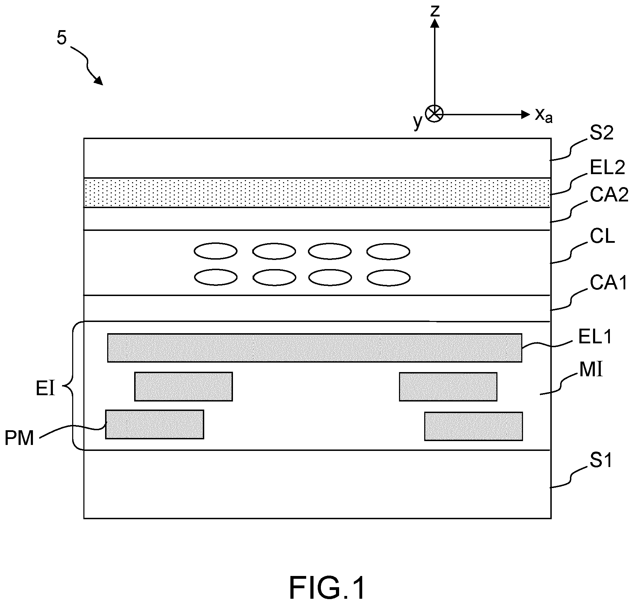

Les modulateurs de phase trouvent des applications dans l'holographie, les correcteurs de front d'onde, la mise en forme d'impulsions laser... Ils peuvent fonctionner en transmission ou en réflexion (LCOS). Un modulateur de phase spatial à cristal liquide ou LC-SPM (Liquid Crystal - Spatial Phase Modulator) est ainsi un système électrooptique qui utilise une matrice de cristaux liquides commandée électriquement pour apporter, en tout point d'un faisceau incident, une modification locale de sa phase. Pour la modulation de phase un mode de réalisation préféré est une structure de cristal liquide 5 dite PAN (Parallel Aligned Nematic) également dénommée « de biréfringence électriquement contrôlée » (ECB pour « Electronically Controled Birefrinrgence »), dont un pixel est illustré figure 1 pour le cas d'un LCOS (réflexion).

Dans cette structure ECB les molécules de cristal liquide nématique sont parallèles entre elles au repos. Le substrat S1 est surmonté d'un empilement de couches de métallisation comprenant des pistes conductrices PM séparées par un matériau isolant MI. Dans un niveau supérieur de l'empilement d'interconnexion El est définie une première électrode EL1 dite électrode de pixel, réfléchissante qui recouvre une grande partie du pixel (typiquement en aluminium ou en cuivre). En surface de l'empilement d'interconnexion est formé un empilement d'une première couche d'alignement CA1 (accroche et alignement des cristaux liquides), d'une couche de cristaux liquide CL, d'une deuxième couche d'alignement CA2 et d'une couche conductrice transparentes formant une deuxième électrode EL2 (typiquement en oxyde d'indium ou ITO). Les couches CA1 et CA2 alignent le cristal liquide selon une direction Xa définie. Par exemple ces couches sont en polymère, typiquement du polyimide, présentant des stries parallèle en surface côté cristal liquide qui forcent son alignement. L'empilement comprend en outre à titre d'exemple une plaque supérieure S2 typiquement de verre. Les matériaux des diverses couches sont choisis pour éviter les réflexions parasites.

Les éléments d'application de tension de commande sur les électrodes EL1 et EL2 ne sont pas décrits en détail, la réalisation de pistes et/ou vias d'accès aux électrodes EL1 et EL2 sont bien connus dans les techniques de circuit intégré.

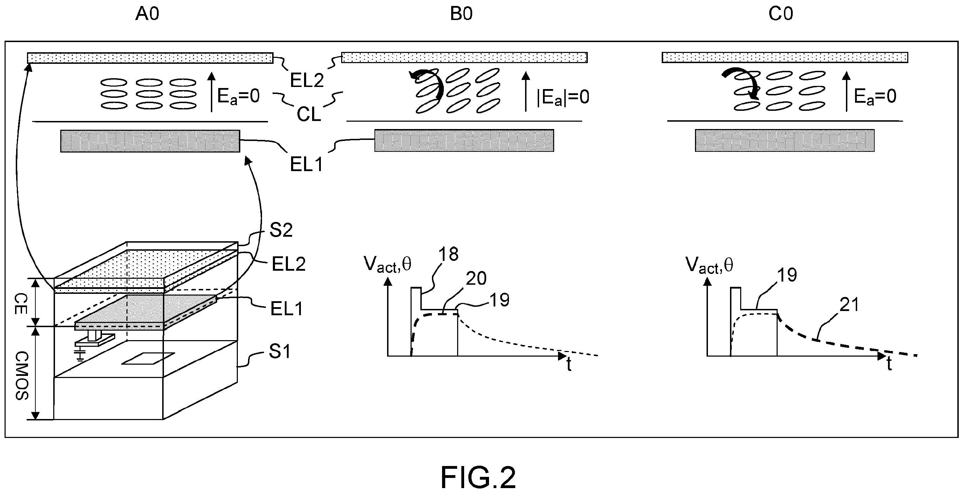

Le fonctionnement d'un LC-SPM en réflexion de type ECB est illustré figure 2. Il est constitué de deux parties, une partie CMOS comprenant le substrat en silicium intégrant au moins une partie de l'adressage et une cellule élémentaire de cristal liquide CE.

En A0 les molécules sont au repos, c'est-à-dire sans tension appliqué entre EL1 et EL2, les molécules sont parallèles entre elles et parallèle au plan de la couche CL et du dispositif 5, orientées selon la direction Xa.

En B0 l'application d'une tension entre EL1 et EL2, dite tension d'activation, génère un champ électrique d'activation Ea qui modifie l'orientation des cristaux liquides. Cette phase d'adressage des cristaux liquides est dite d'activation. L'orientation des molécules est ajustée pixel par pixel, l'électrode EL1 étant définie indépendamment dans chacun des pixels. La biréfringence de la couche de cristal liquide est fonction de cette orientation, et donc le déphasage induit à l'onde incidente dépend de cette tension d'activation appliquée.

Si la polarisation de la lumière incidente est parallèle à l'axe Xa, la tension appliquée est directement liée au déphasage de la lumière. Le retard maximum ΔΦ, engendré sur une lumière incidente de longueur d'onde $\lambda$ par une couche de cristaux liquides d'épaisseur e et dont la différence d'indice de réfraction ordinaire n0 et extraordinaire ne s'écrit $\Delta n$ ($\Delta n = ne-n0$), s'exprime par :

$$\Delta\Phi = (2\pi/\lambda).\Delta n.e.$$

Ainsi pour le dispositif 5 qui agit sur le faisceau lumineux réfléchi, après un aller-retour dans la couche de cristal liquide, le déphasage maximal engendré est donc $2.\Delta\Phi$. La biréfringence $\Delta n$ est une caractéristique des molécules de cristal liquide utilisées, et varie typiquement entre 0.1 et 0.3. Le choix l'épaisseur de la couche de cristal liquide permet donc d'avoir une liberté sur le choix des molécules de cristal liquide pour une modulation de phase du faisceau réfléchi. Ainsi pour un fonctionnement en ECB il convient que la lumière incidente soit polarisée de façon alignée avec l'orientation des cristaux liquide au repos.

La courbe 19 illustre la tension d'activation Vact appliquée pendant la phase d'activation pour obtenir une orientation désirée des molécules. Pour accélérer le redressement des molécules une surtension 18 ou « overshoot » est appliqué en début de phase. La courbe 20 illustre la variation de l'angle d'inclinaison θ des molécules de cristal liquide, qui peuvent être représentés par des bâtonnets s'orientant suivant la direction du champ électrique, dans le plan (Xa, Z) du dispositif. Il faut un certain temps dénommé temps de réponse, pour que l'orientation de la molécule atteigne la valeur d'orientation désirée correspondant à la différence de phase souhaitée. Les molécules de cristal s'orientent suivant la direction du champ électrique indépendamment de sons sens, un champ alternatif carré est préférentiellement appliqué pour éviter les effets d'électrolyse.

En C0 dans une phase dite de relaxation on cesse d'appliquer la tension d'activation, les molécules retournent vers leur positon de repos. On pourra ensuite appliquer à nouveau une tension d'activation correspondant à une nouvelle orientation désirée. La courbe 21 illustre le retour à la position de repos, caractérisé par un temps de relaxation. Cette phase de retour est purement mécanique, avec une vitesse de retour à la position initiale fonction de la viscosité du cristal liquide. On remarque que le temps de relaxation est important, et qu'il faudra donc attendre un certain temps avant de pouvoir rafraîchir le SPM, ce qui limite sa fréquence de fonctionnement.

On peut en outre réaliser une modulation d'amplitude du faisceau incident en insérant un polariseur entre l'empilement d'interconnexion EI et la couche d'alignement CA1.

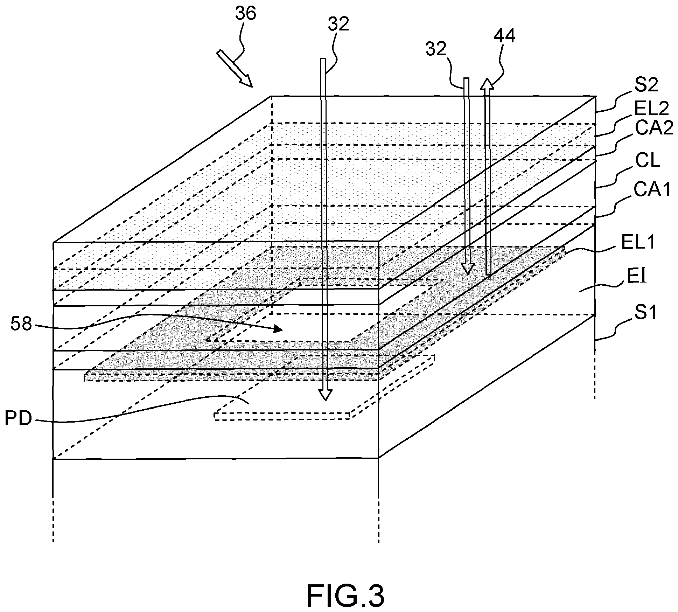

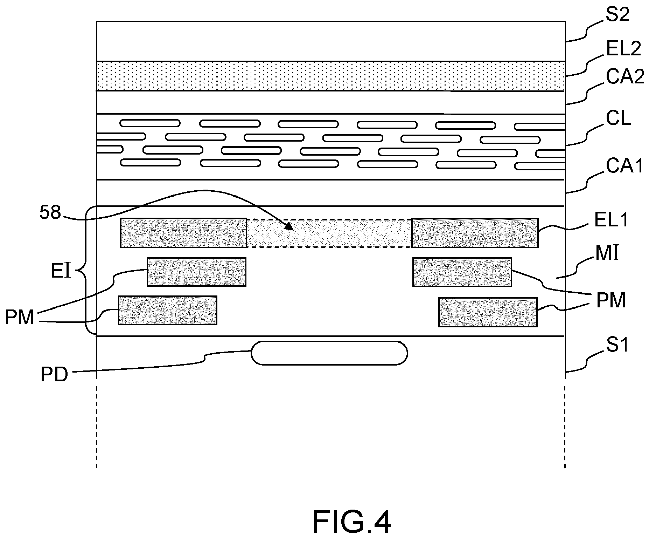

Dans un mode particulier de LCOS décrit dans le document WO2014/087099 un dispositif LC-SPM est hybridé avec une fonction de détection. La figure 3 décrit ce dispositif 30 en perspective et la figure 4 de profil. La structure est proche du LCOS de la figure 1 avec la différence que l'électrode pixel EL1 présente une ouverture 58 qui laisse passer une partie du faisceau incident cohérent 32 (ayant subi des transformations avant d'arriver sur le dispositif 30), qui interfère avec un faisceau référence 36 issu d'une même source. Un photodétecteur PD est intégré dans le substrat silicium et disposé en regard de l'ouverture 58, et assure la fonction de détection. Ainsi une partie du faisceau incident est détectée par PD et l'autre partie est réfléchie par l'électrode EL1, et retraverse le cristal liquide formant le faisceau 44, dont on modifie la phase par commande du cristal liquide, tel qu'expliqué précédemment.

On accède à la phase du faisceau 32 (mesure du front d'onde) par interférométrie avec le faisceau 36, en mesurant l'intensité résultant de l'interférence.

L'objectif de ce dispositif est de réaliser une mesure de front d'onde du faisceau 32, puis de procéder à la mise en forme du faisceau réfléchi 44 (onde dite de « playback »), de manière dépendante des mesures de front d'onde effectuées. Un dispositif de traitement non représenté reçoit les informations du photodétecteur et défini, en fonction de l'information du front d'onde détectée par PD, la modulation de phase que le SPM doit appliquer. Chaque pixel assure simultanément la fonction de détection et la fonction de modulation en phase.

Ce type de dispositif trouve des applications en optique adaptative, pour moduler en parallèles des canaux de communication optiques, en interférométrie... Néanmoins une limitation de la fréquence de fonctionnement de ce dispositif est liée à la lenteur de la relaxation, comme décrit plus haut.

Un but de la présente invention est de remédier aux inconvénients précités en proposant un modulateur de phase à cristal liquide présentant une phase de relaxation accélérée.

**DESCRIPTION DE L'INVENTION**

La présente invention a pour objet un dispositif de modulation en phase d'un faisceau lumineux comprenant :

- une matrice de cellules élémentaires, dénommées pixels, couplée à un circuit d'adressage desdits pixels,

chaque cellule élémentaire comprenant une couche de cristal liquide et, de part et d'autre de ladite couche de cristal liquide, au moins une première électrode dite électrode de pixel commandée par au moins un transistor de commande couplé audit circuit d'adressage, et une deuxième électrode transparente et commune à toutes les cellules, le cristal liquide étant composé de molécules ayant une orientation naturelle de repos dans un plan dudit dispositif et selon une direction d'alignement dite horizontale orienté selon une rangée de pixels dite horizontale, et en l'absence de tension entre l'au moins une électrode de pixel et la deuxième électrode, et une autre orientation en dehors dudit plan dudit dispositif en présence de tension entre l'au moins une électrode de pixel et la deuxième électrode, dénommée tension d'activation (Vact), ladite tension d'activation étant appliquée lors d'une phase d'activation des molécule de cristal liquide,

- le dispositif comprenant en outre un ensemble d'électrodes dites latérales s'étendant selon une direction dite verticale perpendiculaire à ladite direction d'alignement, disposées sur un même plan que l'électode de pixel et configurées pour appliquer, pour chaque pixel et via au moins deux électrodes latérales, une tension dite d'accélération générant un champ électrique latéral sensiblement parallèle à ladite direction d'alignement, dans un sens permettant un retour accéléré des molécules de cristal liquide vers leur orientation de repos, ladite tension d'accélération étant configurée pour être appliquée lors d'une phase dénommée phase de relaxation accélérée, lorsque la tension d'activation n'est plus appliquée.

Selon une variante les électrodes latérales sont des bandes fines disposées de part et d'autre de bandes plus larges formant la ou les électrodes de pixel et dans lequel la tension d'accélération est appliquée entre deux électrodes latérales adjacentes.

Selon un mode de réalisation pendant la phase de relaxation accélérée, une électrode latérale sur deux est connectée à un premier potentiel et une électrode latérale sur deux est connectée à un deuxième potentiel, pour appliquer la tension d'accélération.

Selon un mode de réalisation pixel comprend une seule électrode pixel et une seule électrode latérale.

Selon un autre mode de réalisation chaque pixel comprend n électrodes pixel formant n bandes orientées selon la direction verticale et n électrodes latérales.

Selon un mode de réalisation une électrode latérale est commune à une rangée verticale de pixels.

Selon un mode de réalisation la ou les électrodes latérales d'un pixel sont propres à chaque pixel.

Selon un mode de réalisation, pour chaque pixel, les électrodes latérales sont en outre configurées pour appliquer, en combinaison avec la deuxième électrode, la tension d'activation audit pixel pendant la phase d'activation.

Selon un mode de réalisation le circuit d'adressage comprend, pour l'adressage d'un pixel, au moins cinq éléments de commutation dont au moins trois pour appliquer ladite tension d'activation, incluant l'au moins un transistor de commande, et au moins deux pour appliquer ladite tension d'accélération.

Selon une deuxième variante, pour chaque pixel, les électrodes de pixel et les électrodes latérales sont confondues et dénommées électrodes élémentaires, les électrodes élémentaires présentant une forme de bande de dimensions sensiblement identiques et s'étendant selon la direction verticale, les électrodes élémentaires étant réparties en un premier et un deuxième groupe d'une bande sur deux,

- les électrodes élémentaires étant configurées pour appliquer, en combinaison avec la deuxième électrode, une même tension d'activation lors de la phase d'activation,

- le premier groupe d'électrodes élémentaires étant configuré pour appliquer une tension d'accélération lors d'une première séquence de la phase de relaxation accélérée, les bandes du deuxième groupe étant configurées en haute impédance ou à un potentiel de référence,

- le deuxième groupe étant configuré pour appliquer une tension d'accélération lors d'une deuxième séquence de la phase de relaxation accélérée, lebandes du premier groupe étant configurées en haute impédance ou à un potentiel de référence.

Selon un mode de réalisation le nombre p d'électrodes élémentaires par pixel est un multiple de 4.

Selon un mode de réalisation le circuit d'adressage comprend, pour l'adressage d'un pixel, au moins quatre éléments de commutation pour appliquer ladite tension d'activation, incluant l'au moins un transistor de commande, et au moins quatre éléments de commutation pour appliquer ladite tension d'accélération.

Selon un mode de réalisation le dispositif fonctionne en réflexion et permet en outre une mesure du front d'onde dudit faisceau incident, l'électrode de pixel au moins partiellement réfléchissante présente une ouverture (Op), le circuit d'adressage des pixels est au moins partiellement disposé à l'arrière de ladite matrice et intégré à un substrat, ledit substrat comprenant en outre une pluralité d'éléments de détection disposés en regard desdites ouvertures.

Selon un autre aspect l'invention concerne un procédé d'adressage d'un dispositif de modulation en phase d'un faisceau lumineux, le dispositif d'adressage comprenant une matrice de cellules élémentaires, dénommées pixels, couplée à un circuit d'adressage desdits pixels, chaque cellule élémentaire comprenant une couche de cristal liquide et, de part et d'autre de ladite couche de cristal liquide, au moins une première électrode dite électrode de pixel commandée par un transistor de commande couplé audit circuit d'adressage, et une deuxième électrode transparente et commune à toutes les cellules, le cristal liquide étant composé de molécules ayant une orientation naturelle de repos dans un plan de ladite couche selon une direction d'alignement dite horizontale orienté selon une rangée de pixels dite horizontale, et en l'absence de tension entre l'électrode de pixel et la deuxième électrode, et une autre orientation en dehors dudit plan de ladite couche, en présence de tension entre l'électrode de pixel et la deuxième électrode, dénommée tension d'activation, le dispositif comprenant en outre un ensemble d'électrodes dites latérales s'étendant selon une direction dite verticale perpendiculaire à ladite direction d'alignement et disposées sur un même plan que l'électode de pixel, le procédé comprenant :

- une phase d'activation dans laquelle, pour chaque pixel, on applique ladite tension d'activation,

- une phase de relaxation accélérée dans laquelle, pour chaque pixel, on applique via au moins deux électrodes latérales, une tension dite d'accélération générant un champ électrique latéral (Era) sensiblement parallèle à ladite direction d'alignement, [dans un sens] permettant un retour accéléré des molécules de cristal liquide vers leur orientation de repos, ladite tension d'accélération étant appliquée lorsque la tension d'activation n'est plus appliquée.

Selon un mode de réalisation une électrode latérale est commune à une rangée verticale des pixels et:

- pendant la phase d'activation, les électrodes latérales sont connectées en haute impédance ou à un potentiel de référence,

- pendant la phase de relaxation accélérée, on applique la tension d'accélération via deux électrodes latérales adjacentes disposées de part et d'autre de l'au moins une électrode de pixel.

Selon un mode de réalisation chaque pixel comprend au moins une électrode latérale propre à chaque pixel et:

- pendant la phase d'activation on applique la tension d'activation entre une électrode latérale et la deuxième électrode,

- pendant la phase de relaxation accélérée on applique la tension d'accélération via deux électrodes latérales adjacentes disposées de part et d'autre de l'au moins une électrode de pixel.

Selon un mode de réalisation, pour chaque pixel, les électrodes de pixel et les électrodes latérales sont confondues et dénommées électrodes élémentaires, les électrodes élémentaires présentant une forme de bande de dimensions sensiblement identiques et s'étendant selon la direction verticale, les électrodes élémentaires étant réparties en un premier et un deuxième groupe d'une bande sur deux, et:

- pendant la phase d'activation on applique, via les électrodes élémentaires en combinaison avec la deuxième électrode, la tension d'activation, et

- la phase de relaxation accélérée comprend deux séquences :

  • une première séquence dans laquelle on applique la tension d'accélération via le premier groupe d'électrodes élémentaires, les électrodes élémentaires du deuxième groupe étant connectées en haute impédance ou à un potentiel de référence,

  • une deuxième séquence dans laquelle on applique la tension d'accélération via le deuxième groupe d'électrodes élémentaires, les électrodes élémentaires du premier groupe étant connectées en haute impédance ou à un potentiel de référence.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

La figure 1 déjà citée illustre la structure d'un modulateur de phase à cristal liquide (LC-SPM) de type ECB.

La figure 2 déjà citée illustre le fonctionnement d'un modulateur de phase à cristal liquide de type ECB.

La figure 3 déjà citée illustre un dispositif LC-SPM hybridé avec une fonction de détection pour la mesure et le contrôle de front d'onde selon l'état de l'art, en perspective.

La figure 4 déjà citée illustre un dispositif LC-SPM hybridé avec une fonction de détection pour la mesure et le contrôle de front d'onde selon l'état de l'art, de profil.

La figure 5 illustre un dispositif de modulation de phase selon l'invention.

La figure 6 illustre les différentes étapes de l'adressage du dispositif selon l'invention.

La figure 7 illustre un premier mode de réalisation d'une première variante, avec une électrode pixel et une électrode latérale par pixel, et selon le premier mode d'implémentation.

La figure 8 illustre un deuxième mode de réalisation d'une première variante avec deux électrodes de pixel et deux électrodes latérales par pixel et selon le premier mode d'implémentation.

La figure 9 illustre un dispositif selon l'invention selon la première variante et avec une électrode de pixel et une électrode latérale par pixel, et selon le deuxième mode d'implémentation.

La figure 10 illustre un dispositif selon l'invention selon la première variante et avec deux électrodes de pixel et deux électrodes latérales par pixel, et selon le deuxième mode d'implémentation.

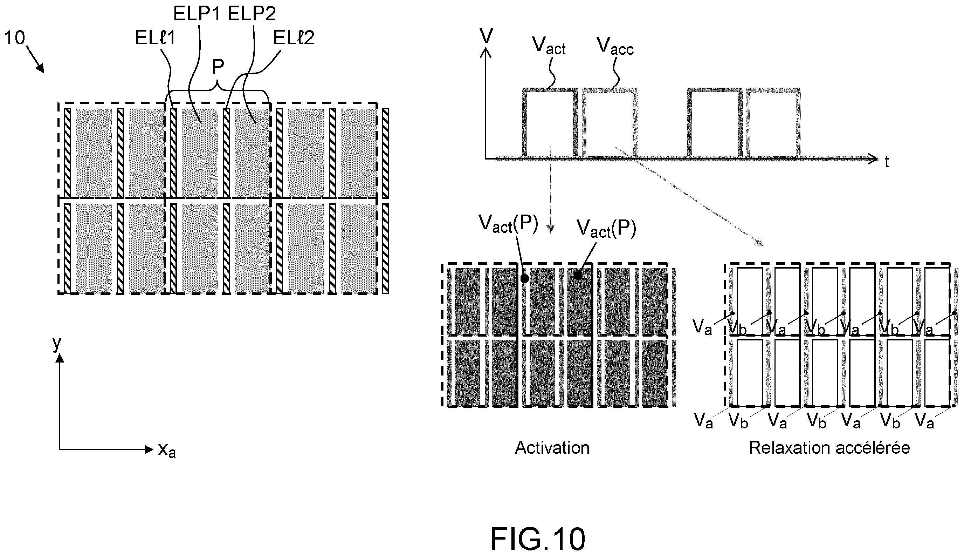

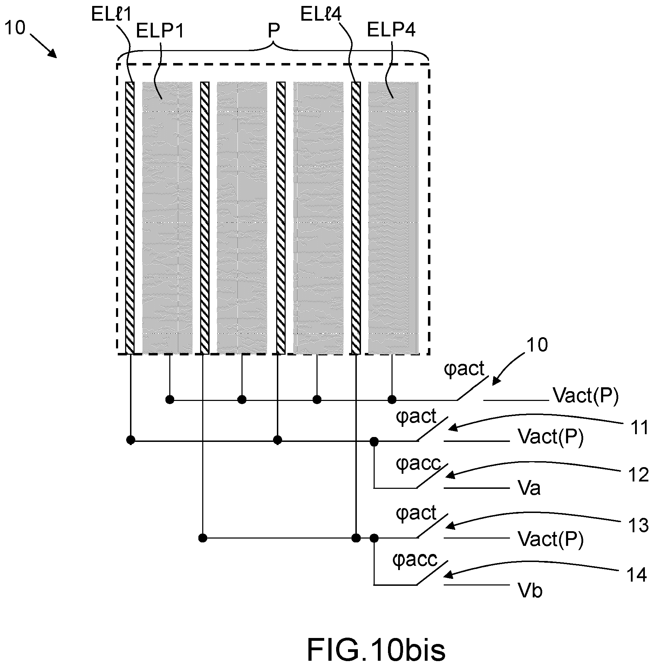

La figure 10bis illustre un exemple de design d'un pixel pour l'application des potentiels aux électrodes selon les différentes phases

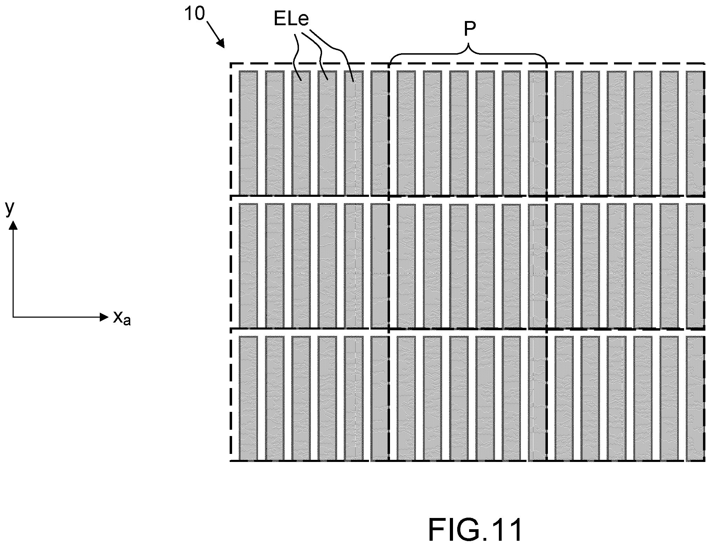

La figure 11 illustre un dispositif selon l'invention selon une deuxième variante dans laquelle pour chaque pixel les électrodes de pixel et les électrodes latérales sont confondues.

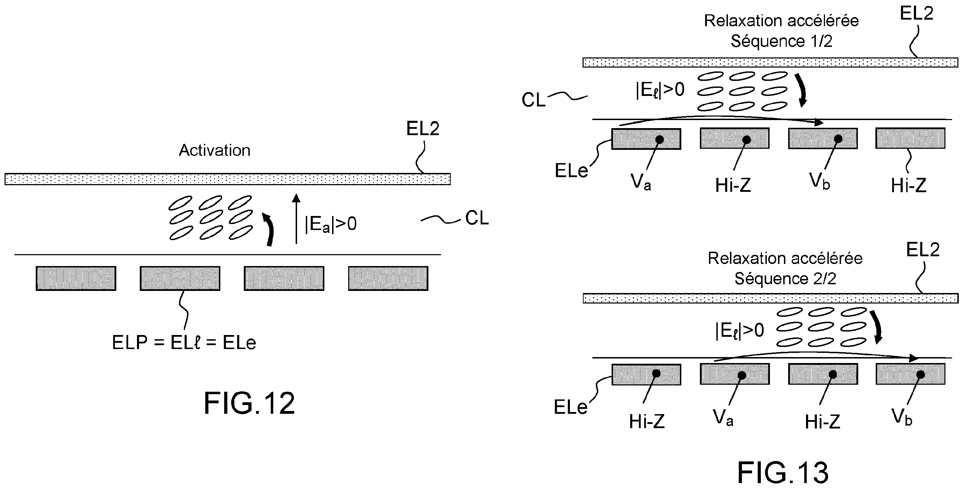

La figure 12 illustre la phase d'activation du dispositif selon la deuxième variante de l'invention.

La figure 13 illustre la phase de relaxation accélérée du dispositif selon la deuxième variante de l'invention.

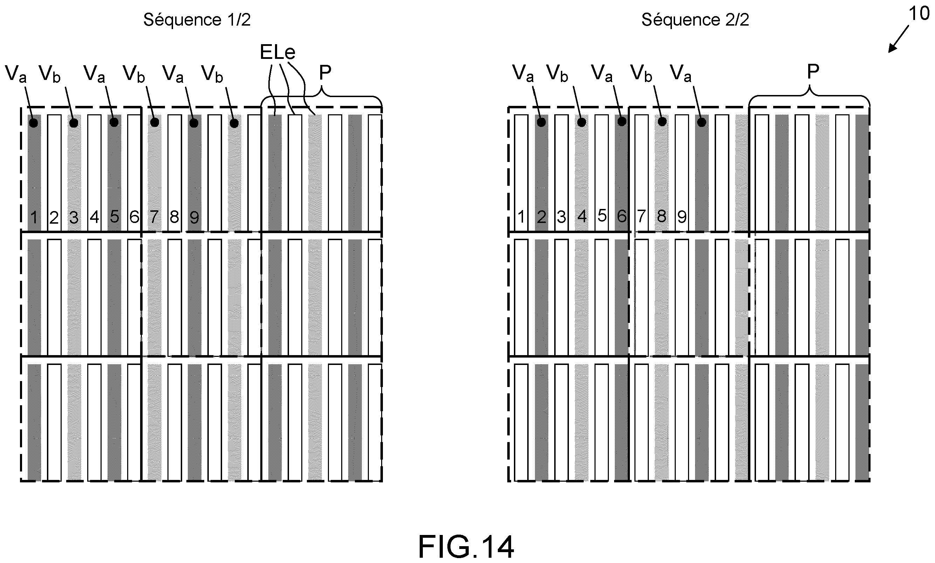

La figure 14 illustre un exemple de réalisation de la deuxième variante avec 6 électrodes par pixel.

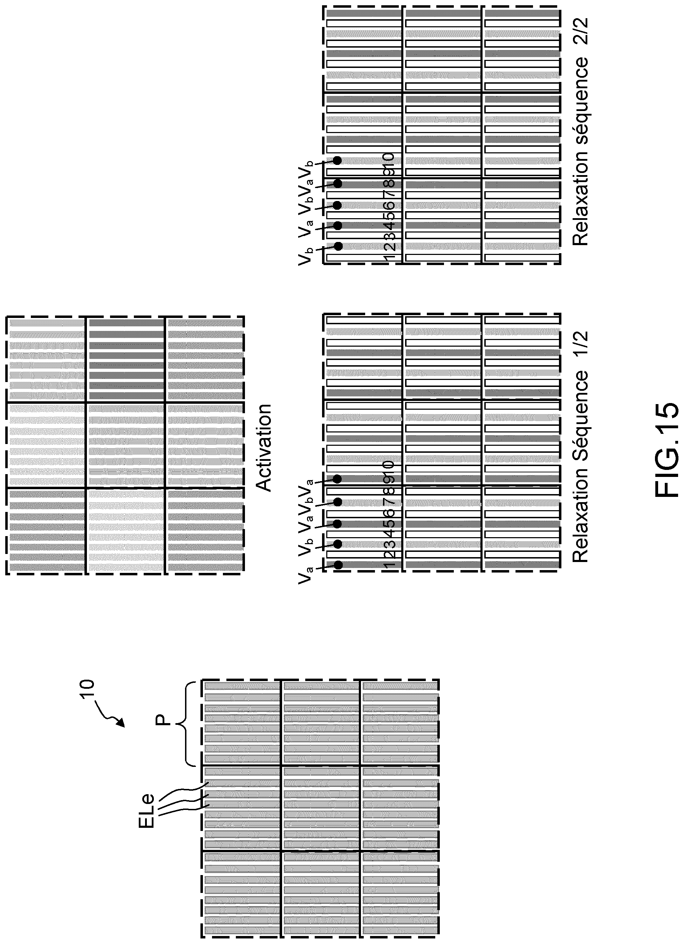

La figure 15 illustre un exemple de réalisation de la deuxième variante avec 8 électrodes par pixel.

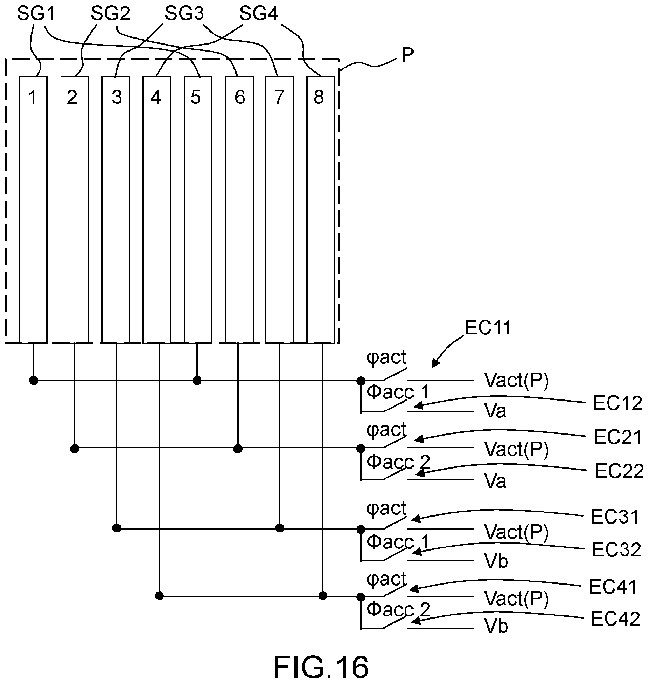

La figure 16 illustre un premier exemple de design pour l'adressage d'un pixel pour le cas de 8 électrodes élémentaires.

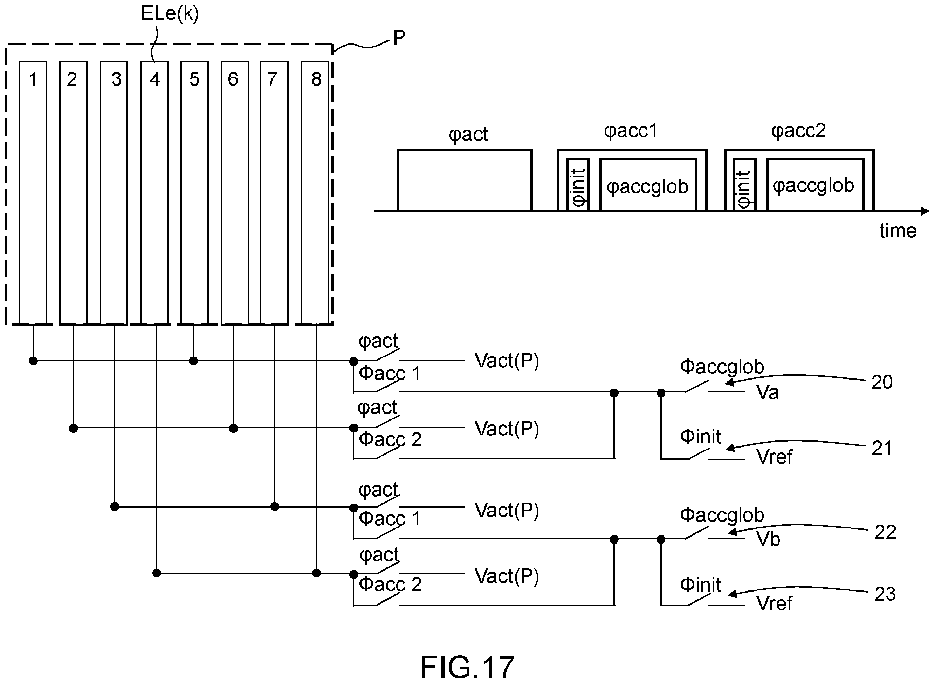

La figure 17 illustre un deuxième exemple de design pour l'adressage d'un pixel pour le cas de 8 électrodes élémentaires.

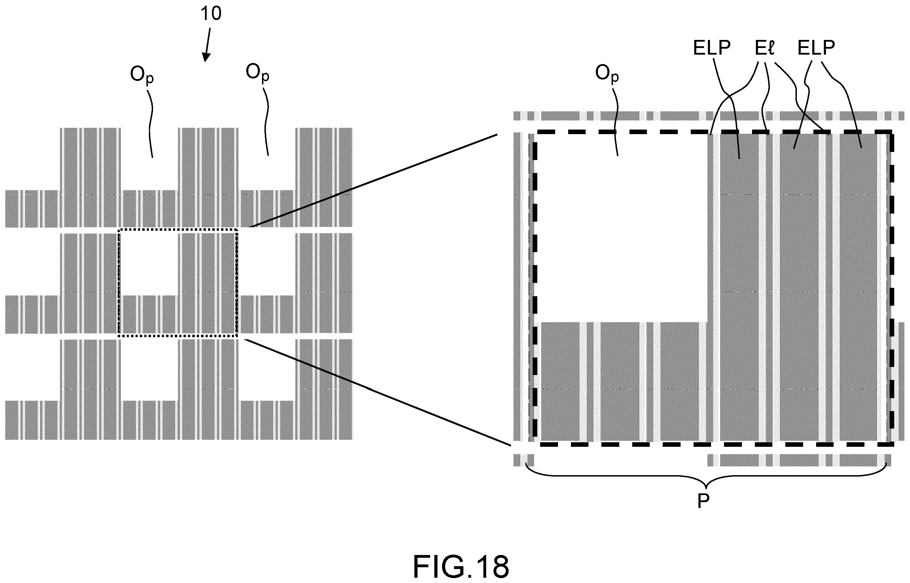

La figure 18 décrit un mode de réalisation du dispositif selon la première variante de l'invention destiné à être intégré à un système de mesure et de contrôle de front d'onde tel que décrit figures 3 et 4.

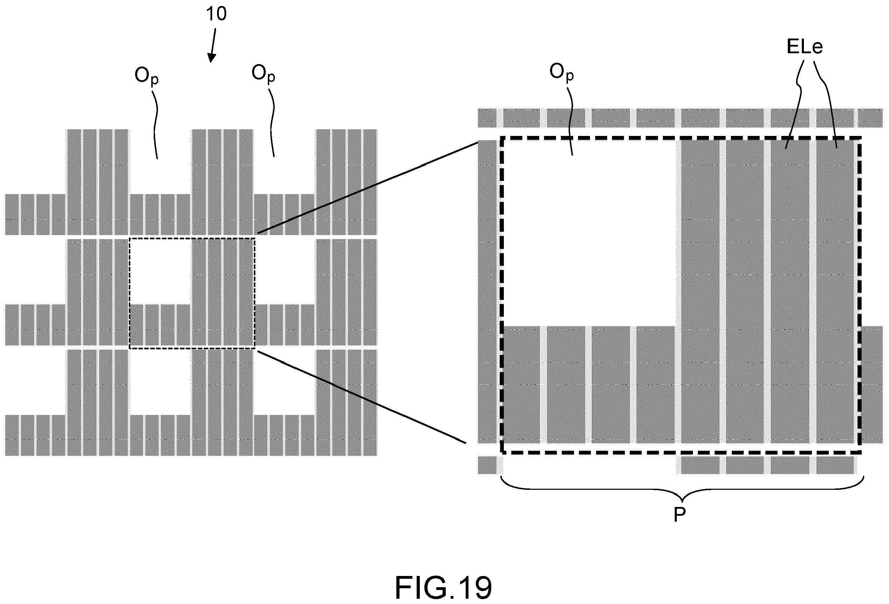

La figure 19 décrit un mode de réalisation du dispositif selon la deuxième variante de l'invention destiné à être intégré à un système de mesure et de contrôle de front d'onde tel que décrit figures 3 et 4.

## DESCRIPTION DETAILLEE DE L'INVENTION

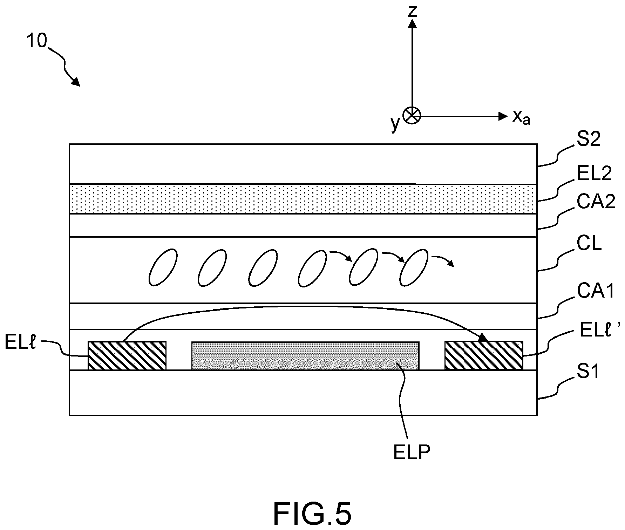

La figure 5 illustre un dispositif 10 de modulation en phase d'un faisceau lumineux selon l'invention. Le dispositif utilise l'orientation contrôlée de molécules de cristal liquide pour provoquer un changement d'indice du milieu. Lors de la traversée de ce milieu par le faisceau lumineux, le changement d'indice contrôlé se traduit par un retard temporel contrôlé $\Delta t$. A une longueur d'onde donnée, $\lambda$, ce retard temporel correspond à un retard de phase, $\Delta\Phi = (2\pi/\lambda).c.\Delta t$, où c est la vitesse de la lumière. Selon un mode de réalisation le faisceau traversant le dispositif est cohérent temporellement (spectre étroit) et selon un autre mode de réalisation le faisceau présente un spectre plus large, l'information de phase par longueur d'onde étant alors obtenue à la réception.

Il comprend une matrice de cellules élémentaires, dénommées pixels, couplées à un circuit d'adressage des pixels (non représenté). Chaque cellule élémentaire comprend une couche de cristal liquide CL et, de part et d'autre de la couche de cristal liquide, au moins une première électrode dite électrode de pixel ELP commandée par au moins un transistor de commande (non représenté) couplé au circuit d'adressage, et une deuxième électrode EL2 transparente et commune à toutes les cellules. On définit le plan du dispositif et un axe Z perpendiculaire à ce plan.

Les cellules sont de type ECB c'est-à-dire que le cristal liquide est composé de molécules ont :

- une orientation naturelle de repos dans un plan du dispositif selon une direction d'alignement Xa dite horizontale orienté selon une rangée de pixels dite horizontale, et en l'absence de tension entre l'électrode de pixel et la deuxième électrode et,

- une autre orientation en dehors du plan de ladite couche en présence de tension entre l'électrode de pixel et la deuxième électrode, dénommée tension d'activation Vact, la tension d'activation étant appliquée lors d'une phase d'activation des molécules de cristal liquide. La tension d'activation est spécifique à chaque pixel (en fonction de l'orientation des molécules souhaitée et donc de la phase souhaitée) et appliquée via le transistor associé.

L'orientation naturelle selon Xa est obtenue par les deux couches d'alignement CA1 et CA2 telles que décrites précédemment. En variante la cellule de cristal ne comprend qu'une seule couche d'alignement.

Le dispositif 10 selon l'invention comprend en outre un ensemble d'électrodes dites latérales s'étendant selon une direction Y dite verticale perpendiculaire à la direction d'alignement Xa et située dans le plan du dispositif. Un plan du dispositif est donc le plan XaY. Les électrodes latérales sont disposées sur un même plan que l'électode de pixel. Deux électrodes latérales ELℓ et ELℓ' sont illustrées sur la figure 5.

Les électrodes latérales sont configurées pour appliquer, pour chaque pixel et via au moins deux électrodes latérales, une tension dite d'accélération Vacc générant un champ électrique latéral Eℓ sensiblement parallèle à la direction d'alignement Xa, permettant un retour accéléré des molécules de cristal liquide vers leur orientation de repos. La tension d'accélération est appliquée lors d'une phase dénommée phase de relaxation accélérée, lorsque la tension d'activation n'est plus appliquée.

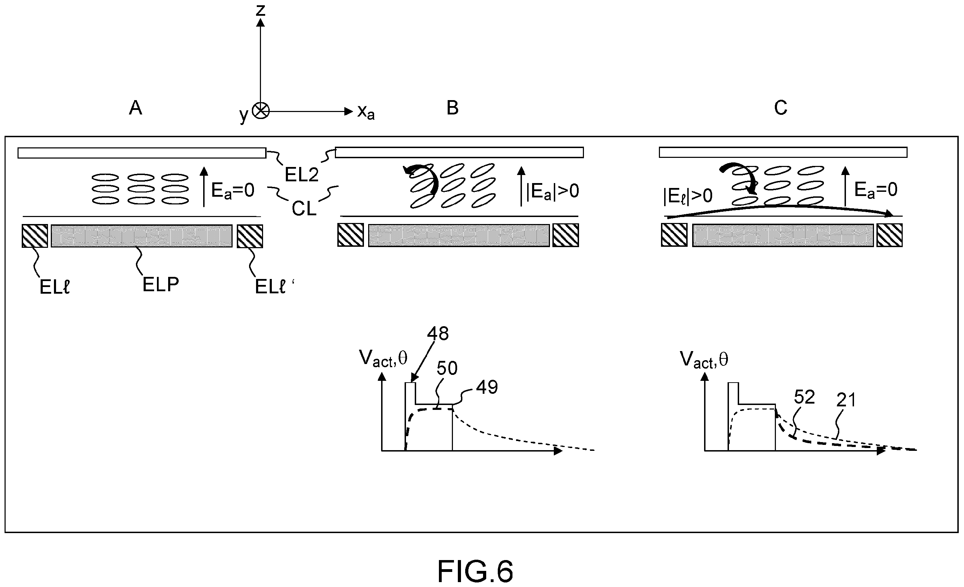

La figure 6 illustre les différentes étapes de l'adressage du dispositif 10 selon l'invention. On retrouve en A l'état initial tel que décrit dans l'état de la technique (A0).

En B pendant la phase d'activation on applique une tension Vact entre ELP et EL2, créant un champ d'activation Ea dans la cellule cristal liquide, et les molécules s'orientent alors selon un angle θ fonction de la valeur de Vact (plus précisément sa valeur absolue). On a |Ea| = |Vact|/d, avec d l'épaisseur de la couche CL.

La courbe 49 illustre la tension Vact en fonction du temps et la courbe 50 l'évolution de l'angle d'inclinaison θ en fonction du temps. Préférentiellement (mais cela est optionnel) on ajoute une surtension 48 pour accélérer l'orientation des molécules.

En C après que la tension Vact a cessé d'être appliquée, on applique la tension Vacc via les électrodes latérales ELℓ et ELℓ', générant le champ latéral Eℓ. La courbe 52 illustre l'angle d'inclinaison θ en fonction du temps, à comparer à la courbe 21 de l'état de l'art décrite précédemment. Grâce à l'application du champ latéral on accélère le retour des molécules à la position initiale. Lors de la phase de relaxation accélérée la ou les électrodes de pixel sont préférentiellement connectée(s) (placées) en haute impédance Hi-Z pour ne pas perturber l'établissement du champ latéral.

L'accélération du retour à la position initiale des molécules permet d'augmenter la fréquence d'utilisation du LC-SPM.

Selon un mode de réalisation le dispositif 10 selon l'invention est configuré pour fonctionner en réflexion, l'électrode de pixel étant au moins partiellement réfléchissante. Selon un autre mode de réalisation le dispositif 10 selon l'invention est configuré pour fonctionner en transmission, l'électrode de pixel étant au moins partiellement transparente.

Selon une première variante les électrodes latérales sont des bandes fines disposées de part et d'autre de bandes plus larges formant la ou les électrodes pixel.

Préférentiellement une électrode latérale sur deux est connectée à un premier potentiel Va et une électrode latérale sur deux est connectée à un deuxième potentiel Vb.

Pour un pixel il existe plusieurs modes de réalisation selon le nombre d'électrodes latérales et d'électrodes de pixel présentes dans un pixel P. Préférentiellement au sein d'un pixel P on a un même nombre n d'électrodes latérales et d'électrodes pixel. Selon un autre mode de réalisation on a n électrodes de pixel et n+1 électrodes latérales.

Selon un premier mode d'implémentation, une électrode latérale est commune à une rangée verticale de pixels. Selon un deuxième mode d'implémentation, la ou les électrodes latérales d'un pixel sont propres à chaque pixel. Les deux modes d'implémentation sont compatibles avec les différents modes de réalisation.

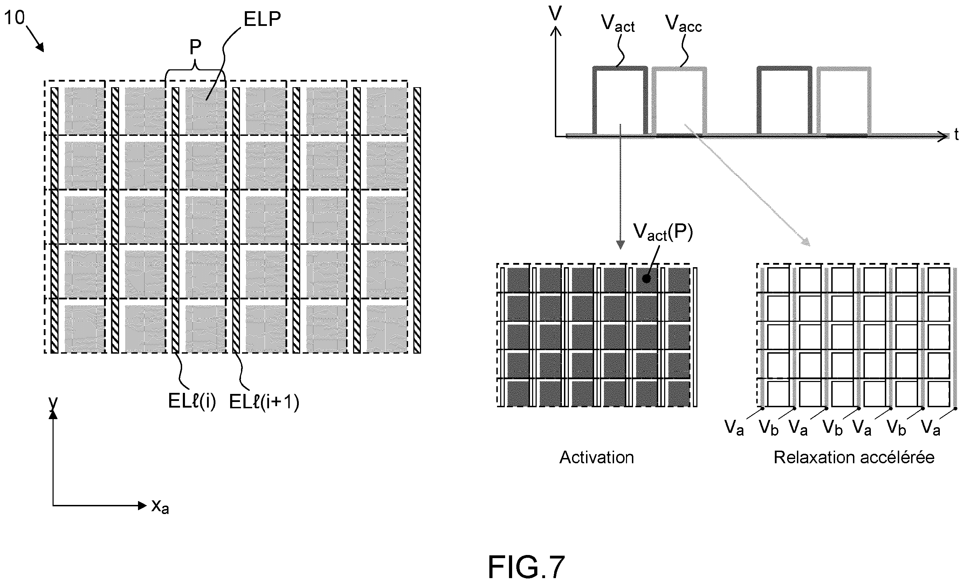

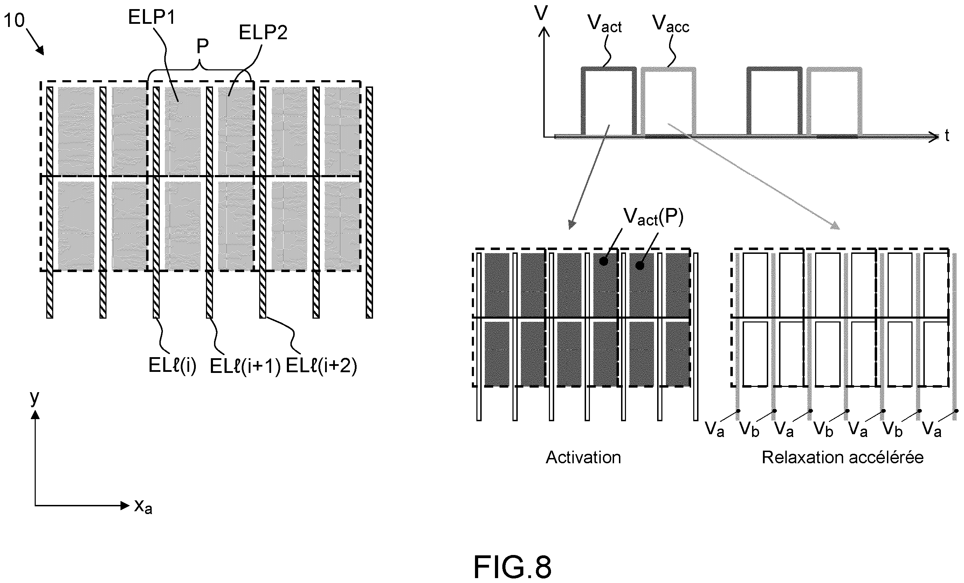

La figure 7 illustre un premier mode de réalisation avec n=1 et la figure 8 illustre un deuxième mode de réalisation avec n=2, et selon le premier mode d'implémentation. Bien entendu une valeur de n supérieure est également possible. L'intérêt est de réduire la distance entre deux électrodes latérales de manière à appliquer un champ latéral d'une intensité plus élevée, mais n est limité par la résolution accessible lors de la fabrication (règles de dessin des pistes métalliques) et les effets de diffraction.

Le dispositif 10 de la figure 7 comprend ainsi une électrode de pixel unique ELP, et celui de la figure 8 deux électrodes de pixel ELP1 et ELP2. Les électrodes de pixels sont toutes connectées à l'au moins un transistor de commande propre à chaque pixel, de manière à pouvoir appliquer la tension d'activation lors de la phase d'activation. La tension d'activation est spécifique à chaque pixel en fonction de l'angle d'orientation désiré: Vact(P). Préférentiellement pendant la phase d'activation les électrodes latérales sont connectées en haute impédance ou à un potentiel de référence.

Les électrodes latérales sont ici des bandes fines qui couvrent toute une rangée verticale de pixels. Soit i l'indice des électrodes latérales ELℓ(i). Lors de la phase de relaxation, la tension d'accélération est appliquée entre deux électrodes latérales adjacentes ELℓ(i), ELℓ(i+1).

Par exemple les électrodes latérales avec un i pair (groupe pair) sont connectées à un potentiel Va et celles avec un i impair (groupe impair) à un potentiel Vb, de manière à appliquer une tension Vacc égale à Vb-Va ou Va-Vb entre deux électrodes latérales adjacentes ELℓ(i), ELℓ(i+1). Dans la figure 7 chaque électrode latérale est utilisée pour l'application de la tension d'accélération à deux pixels horizontaux adjacents. Dans la figure 8 seule l'électrode latérale en bord de pixel est utilisée pour deux pixels horizontaux adjacents.

Pratiquement dans le premier mode d'implémentation les électrodes de pixels paires (respectivement impaires) sont connectées entre elles en périphérie du dispositif.

Une rangée de pixel horizontale est dénommée ligne et une rangée verticale de pixel est dénommée colonne. Selon un mode de réalisation, préféré pour un LCD de type transmissif, pendant la phase d'activation l'adressage s'effectue ligne à ligne. Selon un autre mode de réalisation, préféré pour un LCD de type réflectif avec un circuit CMOS sous la couche de cristal liquide, pendant la phase d'activation l'adressage s'effectue en parallèle sur toutes les lignes.

Un exemple de dimensionnement donné à titre illustratif est pour un pixel de 20 $\mu$m, des électrodes latérales de largeur 0.5 à 1 $\mu$m, séparées de l'électrode pixel voisine de 0,5 à 1 $\mu$m. La largeur de l'électrode de pixel est fonction du nombre n d'électrodes de pixel dans chaque pixel. Préférentiellement l'électrode pixel présente une largeur inférieure ou égale à 3$\mu$ pour ne pas réduire le champ d'accélération.

Un avantage de ce premier mode d'implémentation est une connectique des électrodes latérales simplifiée. Un inconvénient est qu'il n'y a pas ou peu de champ d'activation appliqué dans les zones du cristal situées au-dessus des électrodes latérales pendant la phase d'activation. Et donc le cristal liquide ne va pas s'incliner selon la tension d'activation dans ces zones.

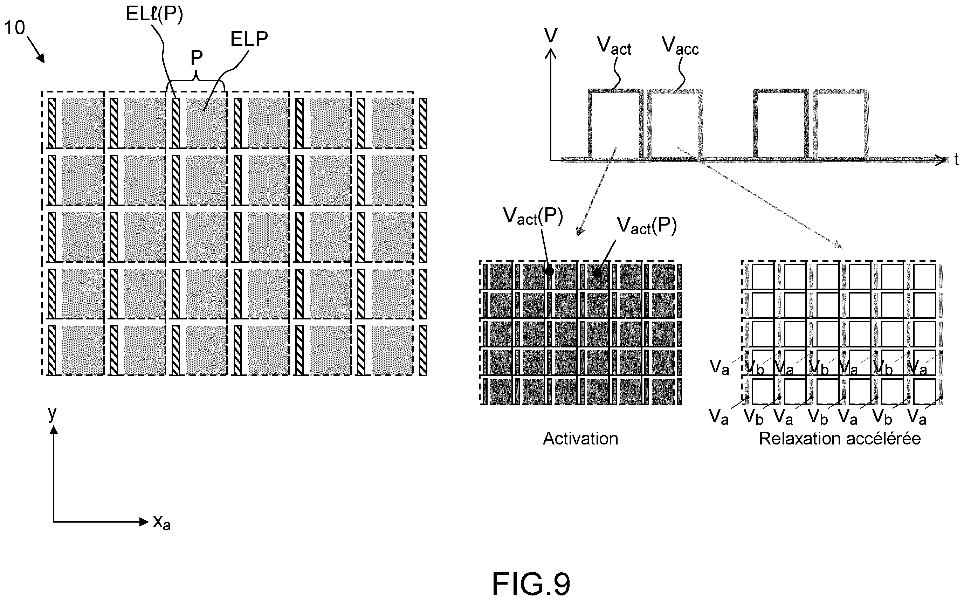

Les figures 9 et 10 illustrent des dispositifs 10 selon l'invention selon le deuxième mode d'implémentation (les électrodes latérales sont individualisées, propres à chaque pixel), la figure 9 pour le cas n=1 et la figure 10 pour le cas n=2. Sur la figure 9 un pixel P comprend une électrode pixel ELP et une électrode latérale pixel EL$\ell$(P). Sur la figure 10 un pixel P comprend deux électrodes de pixel ELP1 ELP2 et deux électrodes latérales de pixel EL$\ell$1 et EL$\ell$2.

La tension d'accélération est appliquée entre deux électrodes latérales adjacentes selon la direction horizontale.

L'avantage de ce deuxième mode d'implémentation est que lors de la phase d'activation on peut appliquer la tension d'activation également aux électrodes latérales du pixel, tel qu'illustré sur les figures 9 et 10. Tout le pixel est alors soumis au champ d'activation, y compris la zone de cristal liquide située au-dessus des électrodes latérales. Pendant la phase de relaxation accélérée les électrodes de pixel sont connectées en haute impédance afin de ne pas perturber l'établissement du champ latéral.

Pour cette première variante préférentiellement la phase de relaxation accélérée s'effectue simultanément sur toutes les colonnes.

La figure 10bis illustre un exemple de design d'un pixel P pour l'application des potentiels aux électrodes selon les différentes phases, pour le cas n=4. Il met en oeuvre 5 éléments de commutation 10, 11, 12, 13, 14. On indice i les électrodes latérales d'un pixel de 1 à n (ou n+1 selon le mode de réalisation) et on définit deux groupes, les électrodes paires et les électrodes impaires.

L'élément 10 est relié aux électrodes pixels ELP. Les éléments 11 et 12 sont reliés aux électrodes latérales destinées à être au potentiel Va, ici les électrodes impaires, et les éléments 13 et 14 sont reliés aux électrodes latérales destinées à être au potentiel Vb, ici les électrodes paires.

Lors de la phase d'activation Φact, toutes les électrodes sont connectées à la tension d'activation Vact(P), les électrodes pixels via l'élément 10 (transistor de commande) qui applique la tension d'activation, les électrodes latérales via les éléments 11 et 13. Les éléments 12 et 14 sont ouverts.

Lors de la phase de relaxation Φacc, les électrodes paires sont connectées à la tension Va via l'élément 12 et les électrodes impaires à la tension Vb via l'élément 14, les autres éléments sont ouverts. L'élément 10 est ouvert et les électrodes pixel sont donc en état haute impédance.

Ainsi le circuit d'adressage du dispositif de modulation selon l'invention comprend, pour l'adressage d'un pixel, au moins cinq éléments de commutation associé dont : au moins trois (10, 11, 13) pour appliquer la tension d'activation (en combinaison avec EL2) pendant la phase d'activation, et au moins deux (12, 14) pour appliquer la tension d'accélération lors de la phase de relaxation accélérée. L'élément de commutation 10 inclut l'au moins un transistor de commande.

Les éléments de commutation ou interrupteurs sont composés par exemple d'un transistor Nmos, qui est à l'état passant sur une commande de grille haute. Ils peuvent aussi être composés de deux transistors N et P en parallèle (dans ce cas, il y a nécessité de générer les commandes complémentaires Φactbar et Φaccbar pour le pilotage du PMOS). Ainsi chaque élément de commutation comprend au moins un transistor.

Un inconvénient de cette première variante est que lors de la phase de relaxation accélérée la zone de cristal liquide située au-dessus des électrodes latérales n'est pas soumise au champ latéral EL, très faible voir nul dans cette zone.

Selon une deuxième variante illustrée figure 11 pour chaque pixel les électrodes de pixel et les électrodes latérales sont confondues et dénommées électrodes élémentaires ELe :

$$ELP = EL\ell = ELe$$

Ces électrodes sont propres à chaque pixel P.

Les électrodes élémentaires ELe présentent alors une forme de bande de dimensions sensiblement identiques et s'étendent selon la direction verticale Y. On indice k ces électrodes élémentaires du dispositif 10 selon l'invention ELe(k). Dans cette variante ce sont les mêmes électrodes qui participent à la phase d'activation et à la phase de relaxation accélérée.

Lors de la phase d'activation les électrodes élémentaires ELe sont configurées pour appliquer, en combinaison avec la deuxième électrode EL2, une même tension d'activation Vact(P) spécifique à chaque pixel P, tel qu'illustré figure 12.

Les électrodes élémentaires sont indicées k de 1 à p. Les p électrodes élémentaires sont réparties en un premier et un deuxième groupe d'une bande sur deux, soit ELe(k pair) et ELe(k impair). La phase de relaxation accélérée comprend deux séquences, tel qu'illustré figure 13.

Le premier groupe d'électrodes élémentaires est configuré pour appliquer une tension d'accélération lors de la première séquence de la phase de relaxation accélérée, les bandes du deuxième groupe étant configurées en haute impédance pendant cette première séquence. Puis lors de la deuxième séquence de la phase de relaxation accélérée le deuxième groupe est configuré pour appliquer la tension d'accélération, et les bandes du premier groupe sont configurées en haute impédance.

Cette deuxième variante présente l'avantage, par rapport à la première variante, de permettre l'application d'un champ latéral au-dessus de toutes les électrodes latérales, grâce aux deux séquences. Une électrode élémentaire servant d'électrode latérale dans une séquence sera disposée entre deux électrodes latérales durant l'autre séquence.

La figure 14 illustre un exemple de réalisation avec 6 électrodes par pixel.

Lors de la première séquence les électrodes ELe(1), ELe(3), ELe(5), ELe(7), ELe(9) (k impairs) appliquent le potentiel Vacc = Va-Vb ou Vb-Va. Pour cela les électrodes 1, 5, 9 sont connectées au potentiel Va (gris foncé) et les électrodes 3, 7, ...sont connectées à Vb (gris clair). Ainsi, avec l'électrode 7 du pixel voisin à Vb, l'électrode de bord de pixel ELe(6) est bien soumise au potentiel d'accélération. Les électrodes ELe(2), ELe(4) ... (k pair) sont connectées en haute impédance (blanc).

Lors de la deuxième séquence les électrodes paires sont connectées à Va ou Vb et les électrodes impaires en haute impédance. Les électrodes ELe(2), ELe(6) ...sont à Va et les électrodes ELe(4), ELe(8)... sont à Vb.

La figure 15 illustre un exemple de réalisation avec 8 électrodes par pixel. L'avantage avec 8 électrodes par pixel est que cette configuration est régulière, c'est-à-dire que les premières électrodes de deux pixels voisins (1 et 9 sur la figure 15) sont commandées de la même manière, soit avec le même potentiel. Ainsi préférentiellement le nombre p d'électrodes ELe par pixel est un multiple de 4 (2 séquences x 2).

Ce fonctionnement est généralisable à une phase de relaxation à m séquences. Pour cela on définit m groupes d'une bande sur m et la phase de relaxation comprend m séquences. Préférentiellement le nombre d'électrodes ELe par pixel est un multiple de 2m (m séquences x 2).

Le premier groupe d'électrodes élémentaires est configuré pour appliquer une tension d'accélération lors de la première séquence de la phase de relaxation accélérée, les bandes des autres groupes étant configurées en haute impédance pendant cette première séquence. Puis lors d'une deuxième séquence de la phase de relaxation accélérée le deuxième groupe est configuré pour appliquer la tension d'accélération, et les bandes des autres groupes groupe sont configurées en haute impédance. Et ainsi de suite jusqu'à la m ième séquence.

Typiquement on ne dépasse pas 3 ou 4 séquences, afin de maintenir une distance suffisamment faible entre deux électrodes ELe(k) / Ele(k+m) appliquant la tension d'accélération lors d'une séquence, respectivement via les potentiels Va et Vb.

La figure 16 illustre un premier exemple de design pour l'adressage d'un pixel P pour le cas de p=8 électrodes élémentaires et 2 séquences. Il convient ici de définir 4 sous-groupes SG1 à SG4 (indice j) de deux électrodes ELe(k) ELe(k+4) chacun. Pour p électrodes élémentaires par pixels et m séquences d'adressage on aura 2m sous-groupes. Chaque sous-groupe SGj est relié à 2 éléments de commutation ECj1, ECj2, soit 4m éléments de commutation au total par pixel, 2m pour l'application de la tension d'activation et 2m pour l'application de la tension d'accélération.

Le principe d'adressage est du même type que celui illustré figure 10bis. Lors de la phase d'activation Φact toutes les électrodes élémentaires sont reliées à Vact(P) via EC11, EC21, EC31, EC41 (4=2m éléments de commutation pour appliquer la tension d'activation), les autres éléments de commutation sont ouverts. Un élément de commutation pour appliquer la tension d'activation comprend au moins un transistor de commande tel que défini précédemment. Lors de la première séquence de relaxation accélérée Φacc1 le premier groupe est connecté à Va via EC12 et le troisième groupe est connecté à Vb via EC32. Puis lors de la deuxième séquence de relaxation accélérée Φacc2 le deuxième groupe est connecté à Va via EC22 et le quatrième groupe est connecté à Vb via EC42 (4=2m éléments de commutation pour appliquer la tension d'accélération).

La figure 17 illustre un deuxième exemple de design pour l'adressage d'un pixel P pour le cas de p=8 électrodes élémentaires et deux séquences m=2. Dans cet exemple on rafraîchit très rapidement les électrodes à un potentiel de référence Vref avant qu'elles ne soient en haute impédance pour effacer la charge résiduelle stockée sur cette électrode (sur un temps très inférieur au temps de basculement des cristaux liquides). Pour cela les deux interrupteurs destinés à appliquer un même potentiel respectivement pendant les première et deuxième séquences de la phase d'accélération accélérée sont connectés soit à Va (respectivement Vb) soit à Vref via deux éléments de commutation additionnels 20, 21 (respectivement 22, 23). L'application du potentiel Vref s'effectue lors d'une préséquence Φinit, avant chaque séquence de la phase de relaxation, comme illustré figure 17. L'élément 20 permet l'application du potentiel Va lors des deux séquences Φacc1 + Φacc2 (Φaccglob).

Ainsi le circuit d'adressage de la matrice de pixels comprend, pour effectuer l'adressage avec m séquences, au moins 4m éléments de commutation en tout. Lorsque chaque élément de commutation est égal à un transistor, on a donc 2m transistors pour appliquer la tension d'activation (en combinaison avec EL2), ces transistors étant dénommés transistor de commande, et au moins 2m transistors pour appliquer la tension d'accélération : m transistors pour appliquer Va à m sous-groupes et m transistors pour appliquer Vb aux autres m sous-groupes.

Selon un mode de réalisation le dispositif 10 de modulation de phase selon l'invention est destiné à être intégré à un système de mesure et de contrôle de front d'onde tel que décrit figures 3 et 4, afin d'en augmenter sa fréquence de fonctionnement. Pour cela le dispositif selon l'invention fonctionne en réflexion, l'électrode de pixel est au moins partiellement réfléchissante et présente une ouverture Op tel qu'illustré figure 18 pour la première variante (avec 6 électrodes de pixel) et figure 19 pour la deuxième variante (avec 8 électrodes élémentaires par pixel) de dispositif 10 selon l'invention.

Le dispositif 10 est alors de type LCOS avec un circuit d'adressage des pixels au moins partiellement intégré à un substrat S1, le substrat comprenant en outre une pluralité d'éléments de détection PD disposés en regard desdites ouvertures (voir figures 3,4).

Selon un mode de réalisation le dispositif selon l'invention comprend une matrice opaque qui délimite les pixels, dénommée « black matrix » en anglais et connue de l'homme de l'art. Cette « black matrix » permet par exemple de corriger les effets de bords entre pixels lors de la phase d'activation.Selon un autre aspect l'invention concerne un procédé d'adressage d'un dispositif 10 de modulation en phase d'un faisceau lumineux tel que décrit précédemment.

Le procédé comprend une phase d'activation dans laquelle, pour chaque pixel, on applique la tension d'activation Vact entre l'au moins une électrode de pixel et la deuxième électrode.

Le procédé comprend également une phase de relaxation accélérée dans laquelle on cesse d'appliquer la tension d'activation, puis, pour chaque pixel, on applique via au moins deux électrodes latérales, une tension d'accélération Vacc générant un champ électrique latéral $E\ell$ sensiblement parallèle à la direction d'alignement Xa, dans un sens permettant un retour accéléré des molécules de cristal liquide vers leur orientation de repos.

Selon un mode de réalisation une électrode latérale est commune à une rangée verticale des pixels et :

pendant la phase d'activation, les électrodes latérales sont connectées en haute impédance ou à un potentiel de référence,

pendant la phase de relaxation accélérée, on applique la tension d'accélération via deux électrodes latérales adjacentes disposées de part et d'autre de l'au moins une électrode de pixel.

Selon un autre mode de réalisation on a au moins une électrode latérale propre à chaque pixel et:

pendant la phase d'activation on applique la tension d'activation entre les électrodes latérales et la deuxième électrode,

pendant la phase de relaxation accélérée on applique la tension d'accélération via deux électrodes latérales adjacentes disposées de part et d'autre de l'au moins une électrode de pixel.

Selon un autre mode de réalisation pour chaque pixel les électrodes de pixel et les électrodes latérales sont confondues et dénommées électrodes élémentaires. Les électrodes élémentaires présentent une forme de bande de dimensions sensiblement identiques et s'étendent selon la direction verticale, les électrodes élémentaires sont réparties en un premier et un deuxième groupe d'une bande sur deux, et :

pendant la phase d'activation on applique, via les électrodes élémentaires en combinaison avec la deuxième électrode, la tension d'activation, et

la phase de relaxation accélérée comprend deux séquences :

une première séquence dans laquelle on applique la tension d'accélération via le premier groupe d'électrodes élémentaires, les électrodes élémentaires du deuxième groupe étant connectées en haute impédance ou à un potentiel de référence,

une deuxième séquence dans laquelle on applique la tension d'accélération via le deuxième groupe d'électrodes élémentaires, les électrodes élémentaires du premier groupe étant connectées en haute impédance ou à un potentiel de référence.

## Revendications

1. Dispositif (10) de modulation en phase d'un faisceau lumineux comprenant :

- une matrice de cellules élémentaires, dénommées pixels, couplée à un circuit d'adressage desdits pixels,

chaque cellule élémentaire comprenant une couche de cristal liquide (CL) et, de part et d'autre de ladite couche de cristal liquide, au moins une première électrode (ELP) dite électrode de pixel commandée par au moins un transistor de commande couplé audit circuit d'adressage, et une deuxième électrode (EL2) transparente et commune à toutes les cellules,

le cristal liquide étant composé de molécules ayant une orientation naturelle de repos dans un plan XaY dudit dispositif et selon une direction d'alignement Xa dite horizontale orientée selon une rangée de pixels dite horizontale, et en l'absence de tension entre l'au moins une électrode de pixel et la deuxième électrode, et une autre orientation en dehors dudit plan dudit dispositif en présence de tension entre l'au moins une électrode de pixel et la deuxième électrode, dénommée tension d'activation (Vact), ladite tension d'activation étant appliquée lors d'une phase d'activation des molécule de cristal liquide,

- le dispositif comprenant en outre un ensemble d'électrodes dites latérales s'étendant selon une direction Y dite verticale perpendiculaire à ladite direction d'alignement Xa, disposées sur un même plan que l'électrode de pixel et configurées pour appliquer, pour chaque pixel et via au moins deux électrodes latérales, une tension dite d'accélération (Vacc) générant un champ électrique latéral (Era) sensiblement parallèle à ladite direction d'alignement, dans un sens permettant un retour accéléré des molécules de cristal liquide vers leur orientation de repos, ladite tension d'accélération étant configurée pour être appliquée lors d'une phase dénommée phase de relaxation accélérée, lorsque la tension d'activation n'est plus appliquée, les électrodes latérales étant des bandes fines disposées de part et d'autre de bandes plus larges formant la ou les électrodes de pixel, et la tension d'accélération étant appliquée entre deux électrodes latérales adjacentes (ELI(i), ELI(i+1)).

2. Dispositif selon la revendication précédente dans lequel, pendant la phase de relaxation accélérée, une électrode latérale sur deux est connectée à un premier potentiel (Va) et une électrode latérale sur deux est connectée à un deuxième potentiel (Vb), pour appliquer la tension d'accélération.

3. Dispositif selon l'une des revendications 1 ou 2 dans lequel chaque pixel comprend une seule électrode pixel et une seule électrode latérale.

4. Dispositif selon l'une des revendications 1 ou 2 dans lequel chaque pixel comprend n électrodes pixel formant n bandes orientées selon la direction verticale et n électrodes latérales.

5. Dispositif selon l'une des revendications précédentes dans lequel une électrode latérale est commune à une rangée verticale de pixels.

6. Dispositif selon l'une des revendications 1 à 4 dans lequel la ou les électrodes latérales d'un pixel sont propres à chaque pixel.

7. Dispositif selon la revendication précédente dans lequel pour chaque pixel, les électrodes latérales sont en outre configurées pour appliquer, en combinaison avec la deuxième électrode, la tension d'activation audit pixel pendant la phase d'activation.

8. Dispositif selon la revendication précédente dans lequel le circuit d'adressage comprend, pour l'adressage d'un pixel, au moins cinq éléments de commutation dont au moins trois (10, 11, 13) pour appliquer ladite tension d'activation, incluant l'au moins un transistor de commande, et au moins deux (12,14) pour appliquer ladite tension d'accélération.

9. Dispositif selon l'une des revendications précédentes fonctionnant en réflexion et permettant en outre une mesure du front d'onde dudit faisceau incident, dans lequel l'électrode de pixel au moins partiellement réfléchissante présente une ouverture (Op), le circuit d'adressage des pixels étant au moins partiellement disposé à l'arrière de ladite matrice et intégré à un substrat, ledit substrat comprenant en outre une pluralité d'éléments de détection (PD) disposés en regard desdites ouvertures.

10. Procédé d'adressage d'un dispositif de modulation en phase d'un faisceau lumineux, le dispositif d'adressage comprenant une matrice de cellules élémentaires, dénommées pixels, couplée à un circuit d'adressage desdits pixels, chaque cellule élémentaire comprenant une couche de cristal liquide (CL) et, de part et d'autre de ladite couche de cristal liquide, au moins une première électrode (ELP) dite électrode de pixel commandée par un transistor de commande couplé audit circuit d'adressage, et une deuxième électrode (EL2) transparente et commune à toutes les cellules, le cristal liquide étant composé de molécules ayant une orientation naturelle de repos dans un plan XaY de ladite couche selon une direction d'alignement Xa dite horizontale orienté selon une rangée de pixels dite horizontale, et en l'absence de tension entre l'électrode de pixel et la deuxième électrode, et une autre orientation en dehors dudit plan de ladite couche, en présence de tension entre l'électrode de pixel et la deuxième électrode, dénommée tension d'activation (Vact), le dispositif comprenant en outre un ensemble d'électrodes dites latérales s'étendant selon une direction Y dite verticale perpendiculaire à ladite direction d'alignement Xa et disposées sur un même plan que l'électode de pixel, les électrodes latérales étant des bandes fines disposées de part et d'autre de bandes plus larges formant la ou les électrodes de pixel, et la tension d'accélération étant appliquée entre deux électrodes latérales adjacentes (ELI(i), ELI(i+1)), le procédé comprenant :

- une phase d'activation dans laquelle, pour chaque pixel, on applique ladite tension d'activation,
- une phase de relaxation accélérée dans laquelle, pour chaque pixel, on applique via au moins deux électrodes latérales, une tension dite d'accélération (Vacc) générant un champ électrique latéral (Era) sensiblement parallèle à ladite direction d'alignement, dans un sens permettant un retour accéléré des molécules de cristal liquide vers leur orientation de repos, ladite tension d'accélération étant appliquée lorsque la tension d'activation n'est plus appliquée.

11. Procédé selon la revendication précédente dans lequel une électrode latérale est commune à une rangée verticale des pixels et dans lequel :

    - pendant la phase d'activation, les électrodes latérales sont connectées en haute impédance ou à un potentiel de référence,
    - pendant la phase de relaxation accélérée, on applique la tension d'accélération via deux électrodes latérales adjacentes disposées de part et d'autre de l'au moins une électrode de pixel.

12. Procédé selon la revendication 10 dans lequel chaque pixel comprend au moins une électrode latérale propre à chaque pixel et dans lequel :

    - pendant la phase d'activation on applique la tension d'activation entre une électrode latérale et la deuxième électrode,
    - pendant la phase de relaxation accélérée on applique la tension d'accélération via deux électrodes latérales adjacentes disposées de part et d'autre de l'au moins une électrode de pixel.

FIG.1

FIG.2

EP 4 300 180 A2

FIG.3

FIG.4

10

z

y ⊗ → $x_a$

S2
EL2
CA2
CL
CA1
ELℓ'
S1

ELℓ

ELP

FIG.5

FIG.6

Activation

Relaxation accélérée

FIG.7

EP 4 300 180 A2

**FIG.8**

Activation

Relaxation accélérée

FIG.9

EP 4 300 180 A2

FIG.10

FIG.10bis

FIG.11

Activation

EL2

$|E_a|>0$

CL

ELP = ELℓ = ELe

**FIG.12**

Relaxation accélérée
Séquence 1/2

EL2

CL

$|E_ℓ|>0$

ELe

$V_a$   Hi-Z   $V_b$   Hi-Z

Relaxation accélérée
Séquence 2/2

EL2

$|E_ℓ|>0$

ELe

Hi-Z   $V_a$   Hi-Z   $V_b$

**FIG.13**

EP 4 300 180 A2

Séquence 1/2

Séquence 2/2

$V_a$  $V_b$  $V_a$  $V_b$  $V_a$  $V_b$  ELe  P

$V_a$  $V_b$  $V_a$  $V_b$  $V_a$  P

FIG.14

EP 4 300 180 A2

Activation

Relaxation Séquence  1/2

Relaxation séquence  2/2

# FIG.15

FIG.16

FIG.17

EP 4 300 180 A2

FIG.18

EP 4 300 180 A2

FIG.19

EP 4 300 180 A2

**RÉFÉRENCES CITÉES DANS LA DESCRIPTION**

**Documents brevets cités dans la description**

- WO 2014087099 A